# EUROPÄISCHE PATENTSCHRIFT

(11) **EP 4 471 314 B1**
(45) Veröffentlichungstag und Bekanntmachung des Hinweises auf die Patenterteilung: **29.04.2026**
(21) Anmeldenummer: 24178502.1
(22) Anmeldetag: 28.05.2024
(51) Int. Cl.: F16L 41/06, F16L 45/00, F16L 41/12

(54) **REVISIONSVORRICHTUNG, REVISIONSARMATUR UND VERSCHLUSSELEMENT**
INSPECTION DEVICE, INSPECTION FIXTURE, AND CLOSURE MEMBER
DISPOSITIF DE RÉVISION, ARMATURE DE RÉVISION ET ÉLÉMENT DE FERMETURE

(30) Priorität: 30.05.2023 DE 102023114108
(43) Veröffentlichungstag der Anmeldung: 04.12.2024
(73) Patentinhaber: 3K-Idee GmbH, 66679 Losheim am See (DE)
(72) Erfinder: Karaca, Ahmet, 66839 Schmelz (DE); Klauck, Markus, 66679 Losheim am See (DE); Kühn, Hans Jürgen, 66822 Lebach (DE)
(74) Vertreter: Patentanwälte Bernhardt / Wolff Partnerschaft mbB

(56) Entgegenhaltungen:
- EP-A2- 0 935 088
- DE-A1- 3 800 245
- GB-A- 2 247 504
- US-A- 5 348 045

## Beschreibung

Oberbegriff des Anspruchs 1 sowie eine Revisionsarmatur.

Durch Benutzung sind Revisionsvorrichtungen in Form von seitlichen Abzweigungen an Rohrleitungen bekannt, welche ein Gehäuse mit einer verschließbaren Revisionsöffnung umfassen. Durch die Revisionsöffnung kann eine Verstopfung innerhalb der Rohrleitung entfernt und/oder Flüssigkeit zur Reinigung der Rohrleitung zugeführt und abgeführt werden.

Aufgabe der Erfindung ist es, eine Revisionsvorrichtung zu schaffen, welche eine besonders einfache und verschmutzungsarme Revision einer Rohrleitung ermöglicht.

Aus EP 0935 088 A2 ist eine Vorrichtung zur Anbringung von Funktionselementen wie Schiebern, Ventile Mischer etc. an einer unter Druck stehenden Rohrleitung bekannt. Die Vorrichtung umfasst ein Halteelement in Form eines an einer Rohrleitung befestigten Gehäuses, welches auf einer Außenseite eine Fixiervorrichtung in Form eines Außengewindes zur lösbaren Befestigung einer Schleuse aufweist. Über das Außengewinde ist die Schleuse lösbar an dem Gehäuse befestigt, wobei die Schleuse einen zu dem Gehäuse hin offenen Kanalabschnitt aufweist. In GB 2 247 504 A ist eine Vorrichtung zur Reinigung und Überprüfung einer unter Druck stehenden Rohrleistung beschrieben. Aus US 5 348 045 A ist eine Vorrichtung zur Erzeugung einer Abzweigung an einer bestehenden Rohrleitung bekannt. DE 38 00 245 A1 beschreibt ein Rohrstück mit einem durch einen Deckel über eine BajonettVerbindung verschließbaren Zugangsstutzen.

Diese Aufgabe wird dadurch gelöst, dass von dem Kanalabschnitt zwei weitere Kanalabschnitte abzweigen und in einem mittigen Kanalabschnitt der Revisionsarmatur eine Bohr- oder Fräsvorrichtung längsbeweglich und drehbar zur Erzeugung eines Lochs gelagert ist, wobei durch den mittigen Kanalabschnitt, welcher koaxial zu dem Kanalabschnitt angeordnet ist, hindurch eine Welle flüssigkeitsdicht geführt ist. An einem nach innen vorstehenden freien Ende der Welle sind zudem Schlüsselflächen vorgesehen, welche korrespondierend zu entsprechenden Schlüsselflächen eines Verschlusselements ausgebildet sind. Des Weiteren ist auf einer Innenseite der Revisionsöffnung eine Gewindeverbindung zur lösbaren Befestigung des Verschlusselements vorgesehen, so dass das Verschlusselement zum Verschluss der Revisionsöffnung über die Schlüsselflächen der Bohr- und Fräsvorrichtung lösbar an der Revisionsöffnung befestigbar ist. Über die Fixiervorrichtung, welche als Außengewinde ausgebildet ist, kann besonders einfach und flüssigkeitsdicht an dem Gehäuse der Revisionsvorrichtung eine Revisionsarmatur zur Erzeugung eine Abzweigung in einer bestehenden Rohrleitung lösbar befestigt werden. Die Fixiervorrichtung kann dabei vorteilhaft angrenzend zu der Revisionsöffnung angeordnet sein.

Erfindungsgemäß ist auf der Innenseite der Revisionsöffnung die Haltevorrichtung zur lösbaren Befestigung des Verschlusselements in Form des Innengewindesvorgesehen sein. Die Haltevorrichtung kann angrenzend zu einem freien Ende der Revisionsöffnung angeordnet sein. Eine Revisionsvorrichtung mit einer entsprechenden Haltevorrichtung, insbesondere mit einem Innengewinde an der Innenseite der Revisionsöffnung, stellt zudem eine eigenständige Erfindung dar und ist unabhängig von dem Vorhandensein einer entsprechenden Fixiervorrichtung an einer Außenseite der Revisionsvorrichtung. Eine derartige Revisionsvorrichtung kann beispielsweise als Revisionsrohr bzw. Reinigungsrohr mit einem Innengewinde oder einem Bajonettverschluss-Element an der Innenseite der Revisionsöffnung ausgebildet sein. Das Revisionsrohr bzw. Reinigungsrohr umfasst vorzugsweise einen ersten Rohrabschnitt, welcher zwischen Rohrleitungen eingesetzt werden kann und von welchem ein zweiter Rohrabschnitt mit der Revisionsöffnung seitlich abzweigt.

Um die Revisionsöffnung nach einer Reinigung oder Inspektion der Rohrleitung sicher zu verschließen, ist an der Revisionsöffnung ein Verschlusselement über die Haltevorrichtung lösbar befestigt, welches die Revisionsöffnung flüssigkeitsdicht verschließt. Das Verschlusselement weist hierzu ein Außengewinde auf, welche mit korrespondierenden Gegenelementen der Haltevorrichtung der Revisionsöffnung haltend zusammenwirken. Hierdurch wird die Revisionsvorrichtung zuverlässig verschlossen und kann an der Rohrleitung verbleiben, um bei einer späteren Revision einfach wieder geöffnet zu werden.

Über die Fixiervorrichtung kann eine Revisionsarmatur lösbar an dem Gehäuse, insbesondere mittels einer Überwurfmutter, befestigt sein, um in einer bestehenden Rohrleitung eine zeitliche Abzweigung zu erzeugen. Die Überwurfmutter umgibt den zu dem Gehäuse hin positionierten Abschnitt der Revisionsarmatur und steht vorzugsweise an einem freien Ende mit vergrößertem Querschnitt der Revisionsarmatur an, über welchen sich die Überwurfmutter an der Revisionsarmatur abstützt. Die Überwurfmutter umfasst vorzugsweise ein Innengewinde, welches ausgebildet ist, um haltend mit einem Außengewinde der Fixiervorrichtung zusammenzuwirken. Dadurch, dass die Revisionsarmatur vor der Befestigung durch die Überwurfmutter insbesondere koaxial zu der Achse des Außengewindes der Fixiervorrichtung verdrehbar ist, kann die Revisionsarmatur in jedem Winkel an einer Rohrleitung befestigt werden, was insbesondere bei beengten Platzverhältnissen von Vorteil ist und gewährleistet, dass immer ein Kanalabschnitt als Ablauf nach unten ausgerichtet werden kann. Die Revisionsarmatur weist dabei einen zu dem Gehäuse hin offenen Kanalabschnitt auf, wobei von dem Kanalabschnitt an einem entgegengesetzten Ende zwei weitere Kanalabschnitte abzweigen. Die zwei weiteren Kanalabschnitte können in einem Winkel zueinander angeordnet sein und insbesondere mit dem zu dem Gehäuse hin offenen Kanalabschnitt eine Y-Form bilden. Von den zwei weiteren Kanalabschnitten kann ein erster Kanalabschnitt an einem freien Ende eine Spül- und/oder Kameraöffnung und der zweite Kanalabschnitt an einem freien Ende eine Öffnung für eine Schmutzwasserabführung aufweisen. Hierdurch wird vorteilhaft ermöglicht, dass durch die Revisionsvorrichtung ohne weitere Umbaumaßnahmen und auch gleichzeitig vorzugsweise durch den nach unten gerichteten zweiten Kanalabschnitt Schmutzwasser aus der Rohrleitung abgeführt und durch einen vorzuweisen nach oben gerichteten ersten Rohrabschnitt Spülwasser und/oder eine Kamera zugeführt wird. An dem freien Ende des ersten und/oder zweiten Kanalabschnitts kann eine Rohrleitung angeschlossen sein, um eine Verschmutzung bzw. Verstopfung sicher über größere Entfernungen geschlossen und damit schadlos abzuführen oder Flüssigkeit zur Reinigung zuzuführen.

Um die weiteren Kanalabschnitte an den freien Enden zuverlässig zu verschließen, kann an einem der Kanalabschnitte oder vorzugsweise an beiden Kanalabschnitten an den freien Enden je eine Montagevorrichtung zur Befestigung einer Verschlussvorrichtung, insbesondere einer Verschlussmutter, vorgesehen sein. Bevorzugt kann die Montagevorrichtung dabei identisch zu der Fixiervorrichtung ausgebildet sein, also beispielsweise das gleiche Außengewinde aufweisen, so das eine entsprechende Überwurfmutter auch zum Verschluss der Revisionsöffnung nach Entfernung der Revisionsarmatur verwendet werden kann.

Die Revisionsarmatur weist erfindungsgemäß eine bewegliche Bohr- oder Fräsvorrichtung, insbesondere eine Lochfräse auf, welche über eine Welle in der Revisionsarmatur drehbar und längsverschiebbar, vorzugsweise in einem lösbar befestigten Deckel der Bohr- oder Fräsvorrichtung flüssigkeitsdicht gelagert ist. Über einen nach außen vorstehenden Teil der Welle kann die Bohr- oder Fräsvorrichtung von außen beispielsweise über eine Bohrmaschine angetrieben und in Richtung der Rohrleitung verschoben werden, um dort für eine seitliche Abzweigung emissionsfrei ein Loch zu bohren/ fräsen. Die Lagerung der Bohr- oder Fräsvorrichtung kann vorzugsweise koaxial zu dem Kanalabschnitt ausgebildet sein, welcher sich zu dem Gehäuse hin öffnet, und insbesondere in einem durch einen Deckel verschlossenen Blindrohr angeordnet sein, welches an die weiteren Kanalabschnitte angrenzt und vorzugsweise zwischen den weiteren Kanalabschnitten angeordnet ist. An einem nach innen vorstehenden freien Ende der Welle sind Schlüsselflächen vorgesehen, welche korrespondierend zu entsprechenden Schlüsselflächen des Verschlusselements ausgebildet sind. Beispielsweise kann das freie Ende als Sechskant-Schlüssel oder dergleichen ausgebildet sein, welches formschlüssig in eine korrespondierende sechskantförmige Aussparung (Innensechskant) in dem Verschlusselement vorstehen kann, um eine Drehmomentübertragung von der Welle auf das Verschlusselement zu ermöglichen. Das Verschlusselement kann einen zylindrischen Grundkörper mit einem Außengewinde an der äußeren Mantelfläche aufweisen und damit vergleichbar eines Gewindestifts bzw. einer Madenschraube ausgebildet sein. Alternativ zu dem Verschlusselement kann an der Schlüsselfläche an dem freien Ende der Welle ein Fräskopf bzw. ein Fräswerkzeug, insbesondere eine Lochsäge oder Lochfräse, lösbar befestigt werden, so dass die Welle als Werkzeugträger sowohl zur Herstellung des Lochs in der Rohrleitung als auch zur Montage des Verschlusselements verwendet werden kann. Dies ermöglicht das emissionsfreie Öffnen und wieder Verschließen einer Rohrleitung. Zudem kann auch ein bereits vorhandenes Verschlusselement einer Revisionsvorrichtung selbst bei einem in dem Rohr anliegenden Druck emissionsfreie immer wieder demontiert werden, beispielsweise bei einer Wartung.

Um die Revisionsvorrichtung an einer bestehenden Rohrleitung zuverlässig zu befestigen, kann an dem Gehäuse ein Anlageelement, insbesondere ein Rohrabschnitt wie ein Halbrohr oder ein anderes Teilstück eines Rohrs mit nicht geschlossenem Querschnitt, mit einem Durchgangsloch zu der Revisionsöffnung vorgesehen sein. An der der Rohrleitung zugewandten Oberseite der Anlagefläche kann ein Dichtungselement wie eine Gummischicht vorgesehen sein, welche nach Andrücken des Anlageelements an die Rohrleitung eine sichere Abdichtung ermöglicht. Durch das Durchgangsloch in dem Anlageelement hindurch kann anschließend mittels der Bohr- oder Fräsvorrichtung eine Abzweigung in Form eines Lochs in der Rohrleitung erzeugt werden. Durch das Loch in der Rohrleitung und das Durchgangsloch in dem Anlageelement kann dann Schmutzwasser aus der Rohrleitung über die Revisionsöffnung entfernt oder Spülwasser bzw. eine Kamera in die Rohrleitung zugeführt werden.

Des Weiteren wird eine Revisionsarmatur für die vorgenannte Revisionsvorrichtung s beansprucht Die Revisionsarmatur umfasst einen offenen Kanalabschnitt, welcher zur Befestigung an einer Revisionsvorrichtung ausgebildet ist und von welchem zwei weitere Kanalabschnitte abzweigen. In einem mittigen Kanalabschnitt der Revisionsarmatur ist eine Bohr- oder Fräsvorrichtung längsbeweglich und drehbar zur Erzeugung eines Lochs gelagert ist, wobei durch den mittigen Kanalabschnitt, welcher koaxial zu dem Kanalabschnitt angeordnet ist, hindurch eine Welle flüssigkeitsdicht geführt ist. An einem nach innen vorstehenden freien Ende der Welle sind Schlüsselflächen vorgesehen sind, welche korrespondierend zu entsprechenden Schlüsselflächen eines Verschlusselements ausgebildet sind, so dass ein Verschlusselement mit einem Außengewinde zum Verschluss einer Revisionsöffnung über die Schlüsselflächen der Bohr- und Fräsvorrichtung an einem Innengewinde einer Revisionsöffnung befestigbar ist. In weiterer Ausgestaltung kann die Revisionsarmatur wie zuvor in Bezug auf die Revisionsvorrichtung beschrieben ausgebildet sein. Das Verschlusselement weist auf einem Außenumfang ein auf und umfasst an einer Stirnseite eine Öffnung mit einem dahinter angeordneten hinterschnittenen Hohlraum. In dem Hohlraum ist in Umfangsrichtung im Uhrzeigersinn und im Gegenuhrzeigersinn je mindestens ein Anschlagelement vorgesehen sein. Wird ein entsprechendes Werkzeug mit mindestens einem seitlich vorstehenden Arm in die Öffnung eingeschoben werden, kann je nach Drehrichtung des Werkzeugs der entsprechende Arm an einem der Anschlagelemente zur Anlage kommen und damit eine Drehmomentübertragung auf das Verschlusselement ermöglichen. Hierdurch kann das Verschlusselement mit dem benötigten Drehmoment in der Revisionsöffnung befestigt oder gelöst werden. Gemäß dem beanspruchten Verfahren wird an der Rohrleitung zur Reinigung die Revisionsvorrichtung oder die Revisionsarmatur befestigt. Insbesondere bei einer bereits vorhandenen Revisionsvorrichtung kann die Revisionsarmatur direkt an der Rohrleitung befestigt werden.

Weitere Besonderheiten und Vorzüge der Erfindung ergeben sich aus der folgenden Beschreibung eines bevorzugten Ausführungsbeispiels anhand der Zeichnungen. Es zeigen:
- Fig. 1: eine perspektivische Darstellung einer an einer Rohrleitung befestigten Revisionsvorrichtung mit einer Revisionsarmatur und einem Verschlusselement;
- Fig. 2: eine Schnittdarstellung durch die Rohrleitung und die Revisionsvorrichtung mit der Revisionsarmatur von Figur 1 in einer ersten Stellung;
- Fig. 3: eine Schnittdarstellung durch die Rohrleitung und die Revisionsvorrichtung mit der Revisionsarmatur von Figur 1 in einer zweiten Stellung;
- Fig. 4a, b: perspektivische Darstellungen des Verschlusselements von Figur 1,
- Fig. 5a, b, c: verschiedene Ansichten der Rohrleitung und der daran befestigten Revisionsvorrichtung von Figur 1, welche mit dem Verschlusselement verschlossen ist und
- Fig. 6a, 6b: verschiedene Ansichten eines alternativen Verschlusselements.

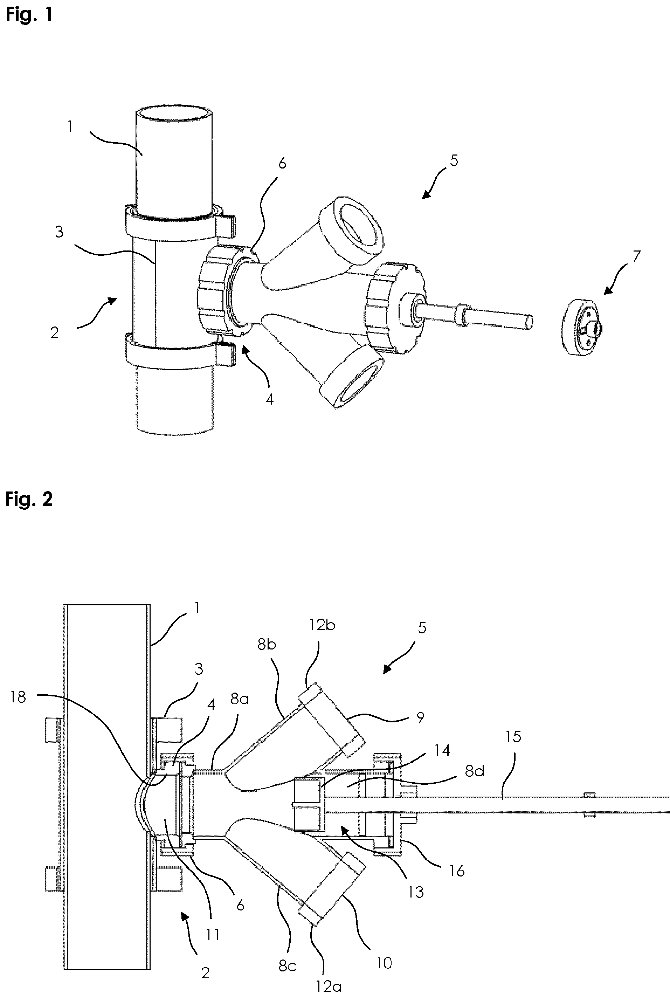

In Figur 1 ist eine perspektivische Darstellung einer Rohrleitung 1 und einer daran befestigten Revisionsvorrichtung 2 gezeigt. An einem Gehäuse 3 der Revisionsvorrichtung 2 ist an einer Außenseite eine Fixiervorrichtung 4 vorgesehen, über welche eine Revisionsarmatur 5 an dem Gehäuse 3 befestigt ist. Die Fixiervorrichtung 4 wird über ein Außengewinde an dem Gehäuse 3 gebildet, welches mit einer Überwurfmutter 6 der Revisionsarmatur 5 haltend zusammenwirkt. Beabstandet von der Revisionsarmatur 5 ist zudem ein Verschlusselement 7 gezeigt, welches, wie nachfolgend noch im Detail beschrieben wird, zum Verschließen der Revisionsvorrichtung 2 nach Entfernen der Revisionsarmatur 5 verwendet wird.

In Figur 2 ist eine Schnittdarstellung durch die Rohrleitung 1 und die Revisionsvorrichtung 2 mit der Revisionsarmatur 5 in einer ersten Stellung gezeigt. Wie aus der Darstellung zu entnehmen ist, weist die Revisionsarmatur 5 einen zu dem Gehäuse 3 hin offenen Kanalabschnitt 8a auf, von welchem zwei weitere Kanalabschnitte 8b, 8c abzweigen. Die zwei Kanalabschnitte 8b, 8c sind in einem Winkel zueinander angeordnet und symmetrisch in Bezug auf die Längsachse des Kanalabschnitts 8a orientiert. Bei der gezeigten Positionierung, welche auch der bevorzugten Montageposition entspricht, ist der Kanalabschnitt 8b nach oben ausgerichtet und weist an einem freien Ende eine Spül- und/oder Kameraöffnung 9 auf. Der Kanalabschnitt 8c ist nach unten orientiert und weist an seinem freien Ende eine Öffnung 10 für eine Schmutzwasserabführung auf. Die Kanalabschnitte 8b, 8c sind mit dem Kanalabschnitt 8a verbunden, welcher bei montierter Revisionsarmatur 5 zu einer Revisionsöffnung 11 innerhalb des Gehäuses 3 der Revisionsvorrichtung 2 hin geöffnet ist, um einen Durchtritt von Flüssigkeit aus einem Loch in der Rohrleitung 1 durch die Revisionsöffnung 11 hindurch in die Revisionsarmatur 5 zu ermöglichen.

An den freien Enden der Kanalabschnitte 8b, 8c ist jeweils eine Montagevorrichtung 11a, 11b in Form eines Außengewindes zur Befestigung einer nicht gezeigten Verschlussvorrichtung, insbesondere einer Verschlussmutter, vorgesehen. Das Außengewinde der Montagevorrichtungen 11a, 11b ist identisch zu dem Außengewinde der Fixiervorrichtung 4 ausgebildet, so dass eine entsprechende Verschlussmutter zum Verschluss der Öffnungen 9,10 auch zum Verschluss der Revisionsöffnung 11 verwendet werden kann.

In der Revisionsarmatur 5 ist eine bewegliche Bohr- oder Fräsvorrichtung 13 vorgesehen. Die Bohr- oder Fräsvorrichtung umfasst in dem gezeigten Ausführungsbeispiel eine Lochfräse 14 und eine Welle 15, an deren freien Ende in der Revisionsarmatur 5 die Lochfräse 14 angeordnet ist. In der gezeigten ersten Stellung ist die Bohr- oder Fräsvorrichtung 13 in einer zurückgezogenen Position angeordnet.

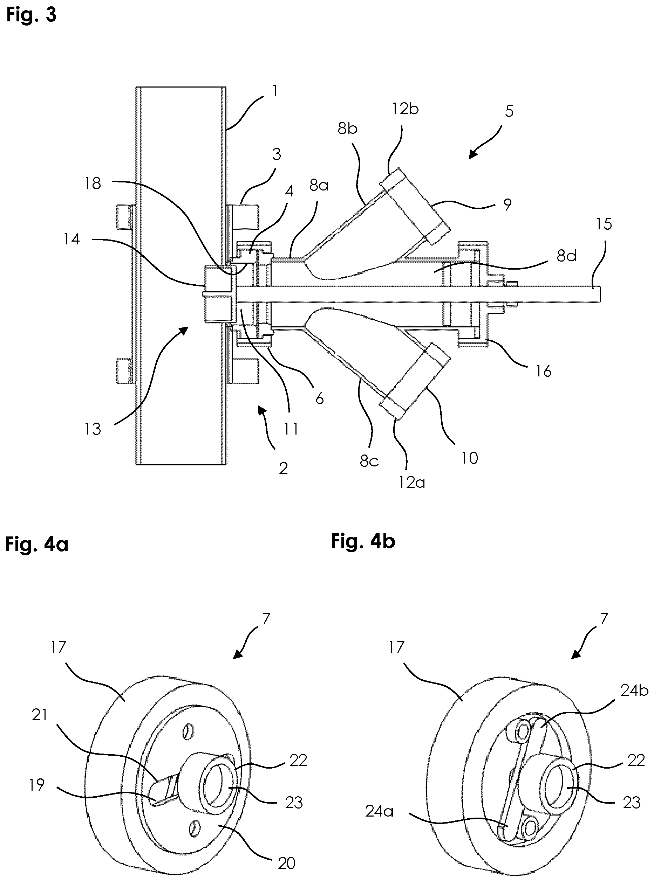

In Figur 3 ist eine Schnittdarstellung durch die Rohrleitung 1 und die Revisionsvorrichtung 2 mit der Revisionsarmatur 5 von Figur 1 in einer zweiten Stellung gezeigt. Wie sich aus dem Vergleich mit der Darstellung in Figur 2 ergibt, ist bei der im Figur 3 gezeigten Stellung die Bohr- oder Fräsvorrichtung 13 in Richtung der Rohrleitung 1 verschoben und steht in die Rohrleitung 1 vor. In dieser Stellung kann mit der Bohr- oder Fräsvorrichtung 13 ein Loch in der Rohrleitung 1 hergestellt werden. Hierzu kann die Bohr- oder Fräsvorrichtung 13 über das aus der Revisionsarmatur 5 herausstehende freie Ende der Welle 15 beispielsweise über eine Bohrmaschine mit einer Dreh- und Vorschubbewegung angetrieben werden. Nach Erzeugung des Lochs in der Rohrleitung 1 kann die Bohr- oder Fräsvorrichtung 13 in die in Figur 2 gezeigte Stellung zurückgezogen werden, wodurch ein ungehinderter Austritt von Schmutzwasser aus der Rohrleitung 1 durch die Revisionsöffnung 11 in den Kanalabschnitt 8a und anschließend in den nach unten gerichteten Kanalabschnitt 8c ermöglicht wird. Gleichzeitig oder nachfolgend kann über die Spül- und/oder Kameraöffnung 9 eine Spülflüssigkeit oder eine Kamera über den Kanalabschnitt 8b, den Kanalabschnitt 8a und die Revisionsöffnung 11 in die Rohrleitung 1 zugeführt werden.

Die Bohr- oder Fräsvorrichtung 13 ist in einem Kanalabschnitt 8d längsbeweglich und drehbar gelagert. Der Kanalabschnitt 8d ist koaxial zu dem Kanalabschnitt 8a angeordnet und an einem freien Ende mit einem Deckel 16 verschlossen, durch welchen hindurch die Welle 15 flüssigkeitsdicht geführt ist.

Die Lochfräse 14 ist an dem vorderen Ende der Welle 15 lösbar befestigt, beispielsweise über eine Gewindeverbindung oder einen Bajonettverschluss. Nach Erzeugung des Lochs in der Rohrleitung 1 und Entfernung der Verschmutzung kann die Lochfräse 14 von der Welle 15 abgenommen und anstelle der Lochfräse 14 das in Figur 1 gezeigte Verschlusselement 7 an dem vorderen Ende der Welle 15 montiert werden. Das Verschlusselement 7 wird in Bezug auf die nachfolgenden Figuren näher beschrieben.

In den Figuren 4a und 4b sind perspektivische Darstellungen des Verschlusselements 7 von Figur 1 gezeigt. Wie aus der Darstellung von Figur 4a zu entnehmen ist, ist das Verschlusselement 7 scheibenförmig ausgebildet und weist auf seinem Außenumfang ein Außengewinde 17 auf. Das Außengewinde 17 ist korrespondierend zu einer als Innengewinde vorgesehenen Haltevorrichtung auf einer Innenseite der Revisionsöffnung 11 ausgebildet, um eine lösbare Befestigung des Verschlusselements 7 in der Revisionsöffnung 11 zu ermöglichen. Zur Montage und Demontage des Verschlusselements 7 ist in dem Verschlusselement 7 ein Hohlraum 19 vorgesehen, welcher über eine Abdeckung 20 mit einem Längsschlitz 21 teilweise verschlossen ist. Durch den Längsschlitz 21 kann ein Werkzeug 22 in den hinterschnittenen Hohlraum 19 eingeschoben werden, um das Verschlusselement 7 sicher zu halten und anzutreiben. Das Werkzeug 22 umfasst in der gezeigten Ausführungsform eine Aufnahme 23, insbesondere mit einem Innengewinde oder einem Bajonettverschluss-Element, zur lösbaren Befestigung des Werkzeugs 22 an dem vorderen Ende der Welle 15 der Revisionsarmatur 5. Die Aufnahme ist identisch zu einer Aufnahme an der Lochfräse 14 ausgebildet, so dass an der Welle 15 wahlweise die Lochfräse 14 oder das Werkzeug 22 befestigt werden können.

Bei der in Figur 4b gezeigten Darstellung ist zum besseren Verständnis die Abdeckung 20 nicht gezeigt. Wie dort zu erkennen ist, umfasst das Werkzeug 22 zwei radial vorstehende Haltearme 24a, 24b, welche zur Anlage an korrespondierenden Anschlagelementen 25a, 25b ausgebildet sind. Die Anschlagelemente 25a, 25b werden in der gezeigten Ausführungsform durch Distanzhülsen von nicht gezeigten Befestigungsschrauben der Abdeckung 20 an dem Verschlusselement 7 gebildet. Bei Drehung des Werkzeugs 22 im Uhrzeigersinn oder im Gegenuhrzeigersinn kommen die Haltearme 24a, 24b jeweils zur Anlage an den Anschlagelementen 25a, 25b, wodurch eine Drehmomentübertragung von der Welle 15 auf das Verschlusselement 7 ermöglicht wird. Dadurch, dass die Haltearme 24a, 24b die Abdeckung 20 in dem Hohlraum 19 hintergreifen, wird zudem das Verschlusselement 7 sicher an dem Werkzeug 22 bzw. der Welle 15 gehalten, bis das Verschlusselement 7 in Eingriff mit dem Innengewinde 18 in der Revisionsöffnung 11 steht. Anschließend können die Haltearme 24a, 24b durch den entsprechend ausgebildeten Längsschlitz 21 in der Abdeckung 20 herausgeführt und damit das Werkzeug 22 entfernt werden.

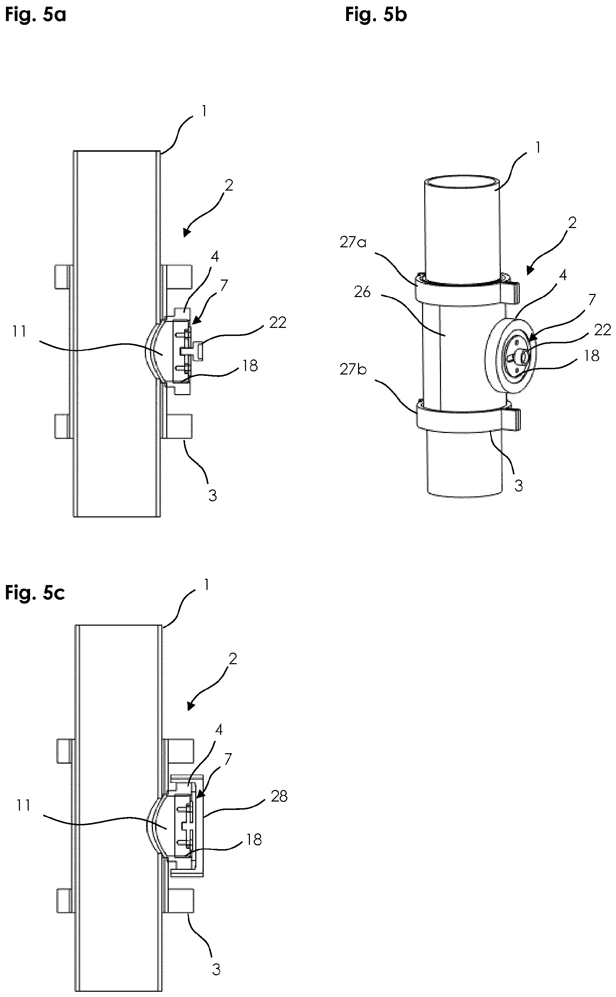

In den Figuren 5a, 5b und 5c ist die Rohrleitung 1 mit der Revisionsvorrichtung 2 in einer abschließenden Phase einer Revision der Rohrleitung 1 gezeigt, in welcher die Revisionsöffnung 11 mittels des Verschlusselements 7 verschlossen ist, um einen Austritt von Flüssigkeit aus der Rohrleitung 1 zu verhindern. In einem vorhergehenden Schritt wurde das Verschlusselement 7 entweder von Hand nach Entfernung der Revisionsarmatur 5 oder über die Welle 15 der Revisionsarmatur 5 in das Innengewinde 18 eingeschraubt und anschließend die Welle 15 von dem Werkzeug 22 getrennt und die Revisionsarmatur 5 durch Lösen der Überwurfmutter 6 entfernt. Das Lösen der Welle 15 von den Werkzeug 22 kann dabei durch eine einfach zu lösende Gewindeverbindung oder einen Bajonettverschluss erfolgen. Bei einer Gewindeverbindung kann die Drehrichtung zum Festziehen vorzugsweise gleich der Drehrichtung zum Lösen des Verschlusselements 7 in dem Innengewinde 18 sein. Hierdurch kann das Verschlusselement 7 bei einer erneuten Revision durch die Revisionsarmatur 5 und insbesondere die Welle 15 gelöst und die Verschmutzung unmittelbar über die Revisionsarmatur 5 sicher abgeleitet werden. Ein Bajonettverschluss kann zudem derart ausgebildet sein, dass ein Drehmoment in beiden Drehrichtungen übertragen werden kann, so dass ein entsprechend ausgebildetes Werkzeug 22 mit einem Bajonettverschluss zum Lösen und Festziehen des Verschlusselements 7 verwendet werden kann.

In Figur 5b ist die Rohrleitung 1 mit der Revisionsvorrichtung 2 von Figur 5a perspektivisch dargestellt. Wie dort zu erkennen ist, umfasst das Gehäuse 3 ein Anlageelement 26 in Form eines Rohrabschnitts, welcher mittels Schellen 27 a, 27 b an den Außenumfang der Rohrleitung 1 angedrückt wird. Zur Abdichtung kann zwischen dem Anlageelement 26 und der Rohrleitung 1 eine Dichtungsschicht insbesondere aus Gummi vorgesehen sein. An das Anlageelement 26 schließt sich vorzugsweise rechtwinklig zur Rohrleitung 1 ein hier nicht bezifferter Rohrabschnitt mit der Revisionsöffnung 11 an dem freien Ende an. Wie der Darstellung weiter zu entnehmen ist, ist die Fixiervorrichtung 4 in Form des Außengewindes unmittelbar angrenzend zu der Revisionsöffnung 11 ausgebildet.

In Figur 5c ist ein Schnitt durch die Rohrleitung 1 und die Revisionsvorrichtung 2 von Figur 5a gezeigt, wobei im Unterschied zur Darstellung von Figur 5a das Werkzeug 22 entfernt wurde und die Revisionsöffnung 11 zusätzlich über eine Verschlussmutter 28 verschlossen ist, wie sie auch zum Verschluss der Öffnungen 9,10 der Revisionsarmatur 5 verwendet werden kann. Die Verschlussmutter 28 wirkt mit der als Außengewinde ausgebildeten Fixierungsvorrichtung 4 zusammen und es ist zur zusätzlichen Abdichtung eine insbesondere ringförmige Dichtung beispielsweise aus Gummi zwischen der Verschlussmutter 28 und dem Gehäuse 3 der Revisionsvorrichtung 2 vorgesehen. Hierdurch wird die Revisionsvorrichtung 2 zuverlässig verschlossen und kann bei einer späteren Revision ohne weiteres wieder geöffnet werden.

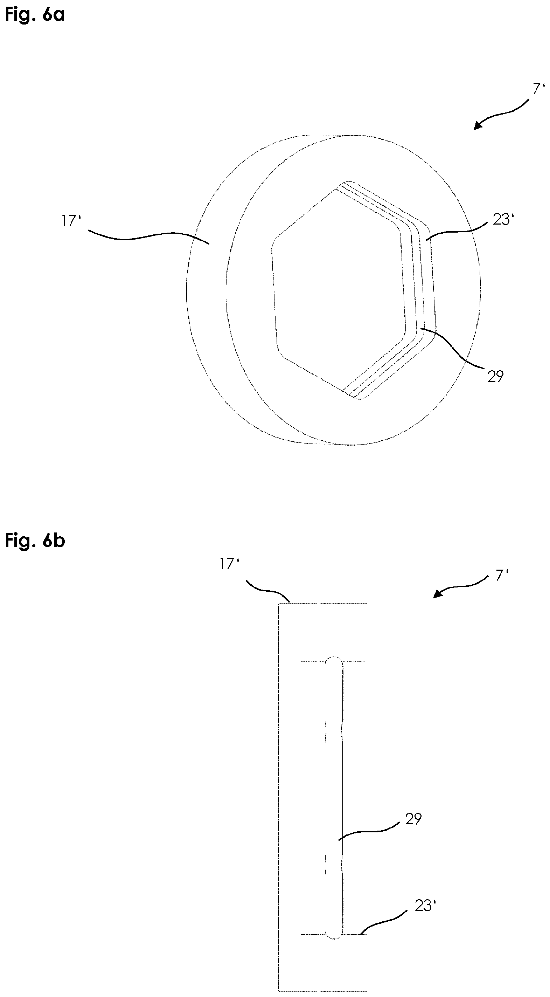

In den Figuren 6a und 6b sind verschiedene Ansichten eines alternativen Verschlusselementes 7' gezeigt. Wie aus der perspektivischen Darstellung von Figur 6a zu entnehmen ist, ist das Verschlusselement 7' als Gewindestift bzw. Madenschraube ausgebildet und umfasst einen zylindrischen Grundkörper mit einem Außengewinde 17' an der äußeren Mantelfläche sowie an einer Stirnseite eine als Schlüsselfläche ausgebildete Aufnahme 23' in Form eines Innensechskant zur formschlüssigen Aufnahme eines entsprechend ausgebildeten Sechskant-Schlüssels. Zudem ist in der umlaufenden Seitenwand der Aufnahme 23' eine umlaufende Haltenut 29 vorgesehen, in welche Halteelemente, beispielsweise eine Haltefeder an einem entsprechend ausgebildeten Werkzeug, insbesondere einem Sechskantschlüssel elastisch haltend eingreifen können, um das Verschlusselement 7' zeitweise an dem Werkzeug, insbesondere der Welle 15 zu halten. Wird eine voreinstellbare Haltekraft überschritten, kann das Verschlusselement 7' von dem Werkzeug gelöst werden, beispielsweise wenn das Verschlusselement 7' über das Innengewinde 18 an der Revisionsvorrichtung 2 befestigt ist und Zug auf das Werkzeug in Löserichtung ausgeübt wird.

In Figur 6b ist ein Längsschnitt durch das Verschlusselement 7' gezeigt, woraus die als Sackloch ausgebildete Aufnahme 23' mit dem sechskantförmigen Querschnitt sowie die umlaufende Haltenut 29 hervorgehen. Die Haltenut 29 kann anders als dargestellt auch nicht einen teilkreisförmigen Querschnitt aufweisen und kann auch nur abschnittsweise in Umfangsrichtung angeordnet sein.

### Bezugszeichenliste:

- 1: Rohrleitung
- 2: Revisionsvorrichtung
- 3: Gehäuse
- 4: Fixiervorrichtung
- 5: Revisionsarmatur
- 6: Überwurfmutter
- 7, 7': Verschlusselement
- 8a, 8b, 8c, 8d: Kanalabschnitte der Revisionsarmatur
- 9: Spül- und/oder Kameraöffnung
- 10: Schmutzwasserabführöffnung
- 11: Revisionsöffnung
- 12a, 12b: Montagevorrichtung
- 13: Bohr- oder Fräsvorrichtung
- 14: Lochfräse
- 15: Welle
- 16: Deckel
- 17, 17': Außengewinde
- 18: Innengewinde
- 19: Hohlraum
- 20: Abdeckung
- 21: Längsschlitz
- 22: Werkzeug
- 23, 23': Aufnahme
- 24a, 24b: Haltearme
- 25a, 25b: Anschlagelemente
- 26: Anlageelement
- 27a, 27b: Schellen
- 28: Verschlussmutter
- 29: Haltenut

## Patentansprüche

1. Revisionsvorrichtung (2) für eine Rohrleitung (1) umfassend ein Gehäuse (3) mit einer verschließbaren Revisionsöffnung (11),
wobei auf einer Außenseite des Gehäuses (3) eine Fixiervorrichtung (4) zur lösbaren Befestigung einer Revisionsarmatur (5) vorgesehen ist und über die Fixiervorrichtung (4) eine Revisionsarmatur (5) lösbar an dem Gehäuse (3) befestigt ist, wobei die Revisionsarmatur (5) einen zu dem Gehäuse (3) hin offenen Kanalabschnitt (8a) aufweist,
wobei von dem Kanalabschnitt (8a) zwei weitere Kanalabschnitte (8b; 8c) abzweigen und in einem mittigen Kanalabschnitt (8d) der Revisionsarmatur (5) eine Bohr- oder Fräsvorrichtung (13) längsbeweglich und drehbar zur Erzeugung eines Lochs gelagert ist,
wobei durch den mittigen Kanalabschnitt (8d), welcher koaxial zu dem Kanalabschnitt (8a) angeordnet ist, hindurch eine Welle (15) flüssigkeitsdicht geführt ist und an einem nach innen vorstehenden freien Ende der Welle (15) Schlüsselflächen vorgesehen sind, welche korrespondierend zu entsprechenden Schlüsselflächen eines Verschlusselements (7) ausgebildet sind,
wobei auf einer Innenseite der Revisionsöffnung (11) eine Gewindeverbindung (18) zur lösbaren Befestigung des Verschlusselements (7) vorgesehen ist, so dass das Verschlusselement (7) zum Verschluss der Revisionsöffnung (7) über die Schlüsselflächen der Bohr- und Fräsvorrichtung (13) lösbar an der Revisionsöffnung (11) befestigbar ist.

2. Revisionsvorrichtung (2) nach Anspruch 1,
**dadurch gekennzeichnet,**
**dass** die Fixiervorrichtung (4) als Außengewinde oder Bajonettverschluss-Element ausgebildet ist und insbesondere angrenzend zu der Revisionsöffnung (11) angeordnet ist.

3. Revisionsvorrichtung (2) nach Anspruch 1,
**dadurch gekennzeichnet,**
**dass** das Verschlusselement (7) ein Außengewinde aufweist, welche mit korrespondierenden Gegenelementen der Haltevorrichtung (18) der Revisionsöffnung (11) haltend zusammenwirken.

4. Revisionsvorrichtung (2) nach einem der Ansprüche 1 bis 3,
**dadurch gekennzeichnet,**
**dass** über die Fixiervorrichtung (4) die Revisionsarmatur (5) lösbar an dem Gehäuse (3) mittels einer Überwurfmutter (6) befestigt ist.

5. Revisionsvorrichtung (2) nach Anspruch 1,
**dadurch gekennzeichnet,**
**dass** die zwei weiteren Kanalabschnitte (8b; 8c) in einem Winkel zueinander angeordnet sind und ein erster Kanalabschnitt (8b) an einem freien Ende eine Spül- und/oder Kameraöffnung (9) und der zweite Kanalabschnitt (8c) an einem freien Ende eine Öffnung (10) für eine Schmutzwasserabführung aufweist.

6. Revisionsvorrichtung (2) nach Anspruch 5,
**dadurch gekennzeichnet,**
**dass** an mindestens einem der zwei freien Enden der weiteren Kanalabschnitte (8b; 8c) eine Montagevorrichtung (12a; 12b) zur Befestigung einer Verschlussvorrichtung (28) vorgesehen ist, wobei die Montagevorrichtung (12a; 12b) insbesondere identisch zu der Fixiervorrichtung (4) ausgebildet ist.

7. Revisionsvorrichtung (2) nach einem der vorhergehenden Ansprüche,
**dadurch gekennzeichnet,**
**dass** an dem Gehäuse (3) ein Anlageelement (26), insbesondere ein Rohrabschnitt, mit einem Durchgangsloch zu der Revisionsöffnung (11) vorgesehen ist, um Revisionsvorrichtung (1) an einer Rohrleitung (1) zu befestigen.

8. Revisionsarmatur (5) zur Befestigung an einer Revisionsvorrichtung (2) nach einem der Ansprüche 1 bis 7,
mit einem offenen Kanalabschnitt (8a), welcher zur Befestigung an einer Revisionsvorrichtung ausgebildet ist,
wobei von dem Kanalabschnitt (8a) zwei weitere Kanalabschnitte (8b; 8c) abzweigen und in einem mittigen Kanalabschnitt (8d) der Revisionsarmatur (5) eine Bohr- oder Fräsvorrichtung (13) längsbeweglich und drehbar zur Erzeugung eines Lochs gelagert ist,
wobei durch den mittigen Kanalabschnitt (8d), welcher koaxial zu dem Kanalabschnitt (8a) angeordnet ist, hindurch eine Welle (15) flüssigkeitsdicht geführt ist und an einem nach innen vorstehenden freien Ende der Welle (15) Schlüsselflächen vorgesehen sind, welche korrespondierend zu entsprechenden Schlüsselflächen eines Verschlusselements (7) ausgebildet sind, so dass ein Verschlusselement (7) mit einem Außengewinde zum Verschluss einer Revisionsöffnung (7) über die Schlüsselflächen der Bohr- und Fräsvorrichtung (13) an einem Innengewinde einer Revisionsöffnung (11) befestigbar ist.

## Claims

1. Inspection device (2) for a pipeline (1), comprising a housing (3) with a lockable inspection opening (11),
wherein provided on an outside of the housing (3) is a fixing device (4) for releasably fastening an inspection fitting (5), and an inspection fitting (5) is releasably fastened to the housing (3) by way of the fixing device (4), wherein the inspection fitting (5) has a channel portion (8a) which is open towards the housing (3),
wherein two further channel portions (8b; 8c) branch off from the channel portion (8a), and a drilling or milling device (13) is mounted in a central channel portion (8d) of the inspection fitting (5) so as to be longitudinally movable and rotatable in order to generate a hole,
wherein a shaft (15) leads in a liquid-tight manner through the central channel portion (8d), the latter being disposed coaxially with the channel portion (8a), and provided on an inward-projecting free end of the shaft (15) are spanner flats that are designed to correspond to corresponding spanner flats of a closure element (7),
wherein provided on an inside of the inspection opening (11) is a threaded connection (18) for releasably fastening the closure element (7) in such a way that the closure element (7) for closing the inspection opening (7) is able to be releasably fastened to the inspection opening (11) by way of the spanner flats of the drilling and milling device (13).

2. Inspection device (2) according to Claim 1,
**characterized in that**
the fixing device (4) is formed as an external thread or bayonet closure element and is in particular disposed adjacent to the inspection opening (11).

3. Inspection device (2) according to Claim 1,
**characterized in that**
the closure element (7) has an external thread which interacts in a holding manner with corresponding mating elements of the holding device (18) of the inspection opening (11).

4. Inspection device (2) according to one of Claims 1 to 3,
**characterized in that**
the inspection fitting (5), by way of the fixing device (4), is releasably fastened to the housing (3) by means of a union nut (6).

5. Inspection device (2) according to Claim 1,
**characterized in that**
the two further channel portions (8b; 8c) are disposed at a mutual angle, and a first channel portion (8b) at a free end has a flushing and/or camera opening (9) and the second channel portion (8c) at a free end has an opening (10) for discharging waste water.

6. Inspection device (2) according to Claim 5,
**characterized in that**
provided on at least one of the two free ends of the further channel portions (8b; 8c) is an assembly device (12a; 12b) for fastening a closure device (28), wherein the assembly device (12a; 12b) is in particular of a design identical to that of the fixing device (4).

7. Inspection device (2) according to one of the preceding claims,
**characterized in that**
provided on the housing (3) is a contact element (26), in particular a pipe portion, having a through-hole leading to the inspection opening (11), in order to fasten the inspection device (1) to a pipeline (1).

8. Inspection fitting (5) for fastening to an inspection device (2) according to one of Claims 1 to 7, having an open channel portion (8a) which is designed for fastening to an inspection device,
wherein two further channel portions (8b; 8c) branch off from the channel portion (8a), and a drilling or milling device (13) is mounted in a central channel portion (8d) of the inspection fitting (5) so as to be longitudinally movable and rotatable in order to generate a hole,
wherein a shaft (15) leads in a liquid-tight manner through the central channel portion (8d), the latter being disposed coaxially with the channel portion (8a),
and provided on an inward-projecting free end of the shaft (15) are spanner flats that are designed to correspond to corresponding spanner flats of a closure element (7) in such a way that a closure element (7) with an external thread for closing an inspection opening (7) is able to be fastened to an internal thread of an inspection opening (11) by way of the spanner flats of the drilling and milling device (13).

## Revendications

1. Dispositif de révision (2) pour une conduite tubulaire (1), comprenant un boîtier (3) muni d'une ouverture de révision (11) obturable,
dans lequel
un dispositif de fixation (4) est prévu sur une face extérieure du boîtier (3) pour la fixation amovible d'une garniture de révision (5), et une garniture de révision (5) est fixée de manière amovible au boîtier (3) par l'intermédiaire du dispositif de fixation (4), la garniture de révision (5) présentant un tronçon de canal (8a) ouvert vers le boîtier (3),
deux autres tronçons de canal (8b ; 8c) bifurquent à partir du tronçon de canal (8a), et un dispositif de perçage ou de fraisage (13) est monté de manière mobile longitudinalement et rotative dans un tronçon de canal central (8d) de la garniture de révision (5) afin de créer un trou,
un arbre (15) est mené de manière étanche aux liquides à travers le tronçon de canal central (8d) disposé coaxialement par rapport au tronçon de canal (8a), et des surfaces pour clé sont prévues à une extrémité libre de l'arbre (15) saillant vers l'intérieur, lesquelles sont formées de manière à correspondre à des surfaces pour clé correspondantes d'un élément d'obturation (7),
un raccord taraudé (18) est prévu sur une face intérieure de l'ouverture de révision (11) pour la fixation amovible de l'élément d'obturation (7), de sorte que l'élément d'obturation (7) peut être fixé de manière amovible à l'ouverture de révision (11) via les surfaces pour clé du dispositif de perçage et de fraisage (13) afin d'obturer l'ouverture de révision (7).

2. Dispositif de révision (2) selon la revendication 1,
**caractérisé en ce que** le dispositif de fixation (4) est conçu comme un filetage ou un élément de fermeture à baïonnette et est disposé en particulier de façon adjacente à l'ouverture de révision (11).

3. Dispositif de révision (2) selon la revendication 1,
**caractérisé en ce que** l'élément d'obturation (7) présente un filetage qui coopère solidairement avec des éléments antagonistes correspondants du dispositif de retenue (18) de l'ouverture de révision (11).

4. Dispositif de révision (2) selon l'une des revendications 1 à 3,
**caractérisé en ce que** la garniture de révision (5) est fixée de manière amovible au boîtier (3) au moyen d'un écrou-raccord (6) par l'intermédiaire du dispositif de fixation (4).

5. Dispositif de révision (2) selon la revendication 1,
**caractérisé en ce que** les deux autres tronçons de canal (8b ; 8c) sont disposés selon un angle l'un par rapport à l'autre, et un premier tronçon de canal (8b) présente, à une extrémité libre, une ouverture de rinçage et/ou de réception de caméra (9), et le deuxième tronçon de canal (8c) présente, à une extrémité libre, une ouverture (10) pour l'évacuation des eaux usées.

6. Dispositif de révision (2) selon la revendication 5,
**caractérisé en ce qu'**un dispositif de montage (12a ; 12b) est prévu à l'une au moins des deux extrémités libres des autres tronçons de canal (8b ; 8c) pour fixer un dispositif d'obturation (28), le dispositif de montage (12a ; 12b) étant en particulier identique au dispositif de fixation (4).

7. Dispositif de révision (2) selon l'une des revendications précédentes,
**caractérisé en ce qu'**un élément d'appui (26), en particulier un tronçon de tube, muni d'un trou traversant vers l'ouverture de révision (11), est prévu sur le boîtier (3) afin de fixer le dispositif de révision (1) à une conduite tubulaire (1).

8. Garniture de révision (5) destinée à être fixée à un dispositif de révision (2) selon l'une des revendications 1 à 7, comprenant un tronçon de canal ouvert (8a) qui est conçu pour être fixé à un dispositif de révision,
dans laquelle
deux autres tronçons de canal (8b ; 8c) bifurquent à partir du tronçon de canal (8), et un dispositif de perçage ou de fraisage (13) est monté de manière mobile longitudinalement et rotative dans un tronçon de canal central (8d) de la garniture de révision (5) afin de créer un trou,
un arbre (15) est mené de manière étanche aux liquides à travers le tronçon de canal central (8d) disposé coaxialement par rapport au tronçon de canal (8a), et des surfaces pour clé sont prévues à une extrémité libre de l'arbre (15) saillant vers l'intérieur, lesquelles sont formées de manière à correspondre à des surfaces pour clé correspondantes d'un élément d'obturation (7), de manière à permettre de fixer un élément d'obturation (7) muni d'un filetage sur un taraudage d'une ouverture de révision (11) via les surfaces pour clé du dispositif de perçage et de fraisage (13), afin d'obturer une ouverture de révision (7).
